# EUROPEAN PATENT APPLICATION

(11) **EP 2 479 116 A1**
(43) Date of publication of application: **25.07.2012**
(21) Application number: 10816729.7
(22) Date of filing: 02.02.2010
(51) Int. Cl.: B65D 41/02, B29C 45/14

(54) **METHOD FOR PRODUCING A MOULDED PLASTIC CAP WITH EMBEDDED FUNCTIONAL LAYER AND MOULDED PLASTIC CAP WITH EMBEDDED FUNCTIONAL LAYER**

(30) Priority: 16.09.2009 ES 200901349 U
(71) Applicant: Linear Overmoulding Applications, SL, 08032 Barcelona (ES)
(72) Inventor: ATANCE ORDEN, Angel, E-08032 Barcelona (ES); VIRON, Alain, E-08032 Barcelona (ES)
(74) Representative: Torner Lasalle, Elisabet
(86) International application number: PCT/ES2010/000041
(87) International publication number: WO 2011/033146

(57) **Abstract**

The method comprises the steps of forming a flattened element (20) including a functional layer (5) and at least one inner layer (1b) of a plastic material attached to said functional layer (5), introducing the flattened element (20) in a mould, and overmoulding an outer layer (1a) with another plastic material injected through an injection channel on said flattened element (20), where said outer and inner layers (1a, 1b) form an end wall (1) of said cap in which said functional layer (5) is encapsulated and located between the outer and inner layers (1a, 1b). In one embodiment, the flattened element (20) includes an intermediate layer (8) attached to one side of the functional layer (5) opposite the inner layer (1b). In another embodiment the functional layer (5) is encapsulated between the inner and intermediate layers (1b, 8) of the flattened element (20).

## Description

### Field of the Art

The present invention relates to a method of manufacturing a moulded plastic cap with an embedded functional layer, which can include a gas barrier material, a catalysing and/or activating material for protection against the action of certain gases, an electronic component, etc. The present invention also relates to a moulded plastic cap with an embedded functional layer.

### Background

Caps for containers made up of two layers of plastic material are known on the market. These caps can mainly be divided into two classes. A first class comprises caps with two layers in which the outer layer, which is generally made of a resistant plastic material, such as for example polypropylene (PP), forms an end wall and a skirt including coupling configurations on the inner surface thereof, and where the inner layer, which is made of a soft material such as ethylene vinyl acetate (EVA) or thermoplastic elastomer (TPE), for example, is limited to an area of the inner bottom part of the cap. This inner layer has the function of creating leak-tightness between the cap and the neck of the container closed by the cap, whereas the outer layer provides mechanical resistance to the cap, which is thus suitable for closing containers containing, for example, carbonated beverages. Another class of caps with two layers includes caps in which the outer layer, which is generally made of a resistant material such as polyethylene (PE) or polypropylene (PP) for example, forms an end wall and a skirt including coupling configurations on the inner surface thereof, and where the inner layer, which is made of a material providing a barrier quality against the permeation of certain gases, basically against the entrance of oxygen, is limited to an area of the inner bottom part of the cap. This barrier material can be active or passive, there being special resins and additives for this purpose. These caps can be applied for closing containers containing products sensitive to oxygen, such as beer or fruit juices, for example.

In these caps, the two layers can be obtained using a compression technique, or the two layers can be obtained using an injection technique, or one layer can be obtained by an injection technique and the other can be obtained by a compression technique. In the case of making both layers by means of an injection process, the two layers can be injected in the same mould by means of an overmoulding technique where two layers are injected sequentially into two different cavities, or a retractable core technique (also known as the core-back technique), where the two layers are injected sequentially into the same cavity. In the overmoulding method, the two layers can be injected at the same time but in two different cavities to shorten work cycles. To transport the cores on which only the first layer is formed to the melding cavities of the second layer, a mould adapted to a rotary plate with which the mould can rotate about its central axis 180 degrees to invert the position of the cavities can be used, or a mould provided with linear displacement according to an indexing system such as the one described in international patent application WO 2005009718 can be used, where the cores on which only the first layer is formed are transported linearly to the cavities where the second layer will be formed, and given that alignments of cavities of the first stage and alignments of cavities of second stage can be arranged alternately, the distance of this transport is minimal, contributing to shortening the cycle time. This technology can be considered the most effective in relation to productivity.

In certain applications having caps in which the end wall is made of three layers, i.e., with an embedded functional layer between an outer layer and an inner layer, may be of interest, for example when the functional layer is made of a material that is not to come into contact with the packaged product either because it is not suitable for contact with foods, or to prevent any type of unwanted interaction between the material of the functional layer and the packaged product. A functional layer in the form of an electronic component with information codes (chips) housed within the container can be mentioned as simple examples of application of this third functional layer in plastic caps for container closures, where this chip would be externally and internally covered by respective layers of plastic material that would protect it against contact with the packaged product and with the external environment, or a functional layer with barrier properties against specific gases for protecting the packaged product when this barrier layer is not to come into contact with the packaged product.

Patent US 6095359 discloses a plastic cap having an end wall, a perimetral skirt suitable for being coupled to the neck of a container and a barrier layer embedded entirely between outer and inner layers of said end wall. The cap is obtained by simultaneous co-injection of a first plastic material forming said outer and inner layers of the end wall, as well as the skirt, and a second plastic material forming the barrier layer. This cap does not have an auxiliary closure configuration, such as, for example, a sealing lip or a perimetral closure rib, such that the closure is produced directly by pressing one end of the neck of the container against an inner surface of the end wall of the cap. A drawback of this cap is that the method of simultaneous co-injection is not capable of assuring well-defined limits between the different layers injected simultaneously or sufficient adhesion between the layers to prevent a risk of peeling or delamination.

International patent application WO 2008090354 A1, of Colormatrix, describes a container with a plastic cap including a composition capable of acting as a catalyst and/or activator to protect a packaged product within the container.

An objective of the present invention is to provide a method for the manufacture of a moulded plastic cap with an embedded functional layer, where the functional layer can be a layer of a catalysing and/or activating composition, such as that described in the aforementioned WO 2008090354 Al for example, a barrier layer made for example of a plastic or metal material, or an electronic component.

Another objective of the present invention is to provide a moulded plastic cap with an embedded functional layer designed such that it can be obtained by the method of the present invention.

### Description of the Invention

The present invention contributes to overcoming the aforementioned and other drawbacks by providing a method of manufacturing a moulded plastic cap with an embedded functional layer, comprising the following steps: first, forming a flattened element including a functional layer and at least one inner layer of a plastic material attached to said functional layer; then introducing said flattened element in a cavity of a mould and overmoulding an outer layer with another plastic material injected through an injection channel on said flattened element. The mentioned cavity of the mould is configured to complete the formation of said cap, such that the mentioned outer and inner layers form an end wall of the cap in which the functional layer is embedded and is not exposed, located between the outer and inner layers, and where the plastic material of the outer layer further forms a skirt extending axially from a periphery of said end wall.

The cavity of the mould where the plastic material of the outer layer is injected is preferably configured for forming on an inner surface of said skirt coupling configurations configured for externally coupling with corresponding coupling configurations formed on an outer surface of a neck of a container, and an auxiliary closure configuration extending axially from an inner surface of the end wall at a certain distance from the skirt. The functional layer is arranged in a region of the end wall inscribed within the perimeter of said auxiliary closure configuration.

The method preferably comprises forming said inner layer injecting the corresponding plastic material through another injection channel other than the mentioned injection channel through which the plastic material of the outer layer is injected, the functional layer being embedded in said end wall between the outer and inner layers of the end wall.

The present invention also provides a moulded plastic cap with an embedded functional layer which can be obtained by the method of the present invention. The cap comprises an end wall and a skirt extending axially from a periphery of said end wall. Coupling configurations, such as threads for example, are formed on an inner surface of said skirt for externally coupling with corresponding coupling configurations formed on an outer surface of a neck of a container. The cap of the present invention further includes an auxiliary closure configuration, which can be, for example, a sealing lip in the form of a tubular projection extending axially from an inner surface of the end wall at a distance from the skirt, and is configured and arranged to elastically press against an inner surface of the neck of the container, although other alternative auxiliary closure configurations are not discarded. The cap of the present invention further includes a functional layer that is not exposed, embedded in the end wall, in a region thereof inscribed within the perimeter of said auxiliary closure configuration. In one embodiment, the functional layer is embedded between an outer layer and an inner layer of the end wall. In another embodiment, the functional layer is embedded between an intermediate layer and an inner layer of the end wall, said intermediate layer being located between the outer layer and the functional layer.

With this construction, the functional layer is completely embedded within the end wall of the cap and, according to the technique of sequential injection overmoulding, the functional layer can be formed from yet another plastic material injected through a third injection channel or can be a solid body, such as, for example, a body made of a plastic material, a body made of a metal material, or an electronic component, included as an insert between the outer and inner layers of the end wall of the cap during the sequential injection overmoulding process.

The outer layer of the end wall, the skirt with the coupling configurations, and the auxiliary closure configuration are preferably integral with a plastic material injected from an injection channel, and the inner layer of the end wall is made of another plastic material injected from another injection channel. When the end wall includes the mentioned intermediate layer, the latter can be of yet another plastic material injected from yet another injection channel. In one embodiment, the functional layer has a perimetral edge surrounded, covered and closed by a perimetral wall connected to the outer and inner layers of the end wall and arranged at a distance from the auxiliary closure configuration, in which case the mentioned perimetral wall can be formed with the plastic material of the outer layer or with the plastic material of the inner layer of the end wall, or partly with the plastic material of the outer layer and partly with the plastic material of the inner layer of the end wall. Alternatively, the perimetral wall can be formed with the plastic material of the intermediate layer or with the plastic material of the inner layer, or partly with the plastic material of the intermediate layer and partly with the plastic material of the inner layer of the end wall. Alternatively, the perimetral edge of the functional layer can be surrounded, covered and closed by the auxiliary closure configuration, and the inner layer of the end wall has a perimetral edge connected to the auxiliary closure configuration.

One embodiment of the method of the present invention allows forming the functional layer injected by means of a sequential injection overmoulding process using a mould with two cavities and a composite core which has a fixed part and a retractable part that can be moved between an extended position and a retracted position. With the core inserted in a first of the two cavities and the retractable part in the extended position, the plastic material of the functional layer is first injected through a first injection channel, then with the core still inserted in said first cavity but with the retractable part moved to the retracted position, the plastic material of the inner layer of the end wall is injected through a second injection channel, and finally the core with the functional layer and the inner layer of the end wall formed thereon is inserted in the second cavity where the plastic material forming the outer layer of the end wall and other parts of the cap, i.e., the skirt with the coupling configurations and the auxiliary closure configuration, is injected through a third injection channel. Therefore, the plastic materials of the two layers inner and outer of the end wall of the cap are injected sequentially on opposite faces of the plastic material forming the functional layer, which has previously been injected first.

This technique of sequential injection overmoulding of three plastic materials provides very well-defined limits between the three different layers. Furthermore, by selecting the respective plastic materials of the outer and inner layers of the end wall and of the plastic material of the functional layer so that they comprise the same base polymer, or different base polymers which are compatible in terms of mutual adhesion, an excellent adhesion between the three layers is achieved, which prevents the risk of peeling or delamination. The base polymers of the plastic materials of the outer, inner and intermediate layers and of the plastic material of the functional layer are preferably selected from a group including polyethylene (PE), ethylene vinyl acetate (EVA) and styrene-ethylene/butadiene-styrene (SEBS).

In one embodiment, the base polymers of the plastic materials of the outer and inner layers, and optionally of the intermediate layer, of the end wall are polyethylene (PE), and the base polymer of the plastic material of the functional layer is ethylene vinyl acetate (EVA). The plastic material of the functional layer comprises the base polymer combined with a chemical product capable of acting as a catalyst and/or activator to protect a product packaged within the container closed with the cap against the action of one or more gases, and the outer and inner layers of the end wall are made of the same plastic material. Polyethylene (PE) is impermeable to liquids and water vapour, whereas it is relatively permeable to certain gases, such as oxygen and carbon dioxide. In the cap of the present invention, the thickness of the inner layer of the end wall is preferably equal to or less than 0.5 times the thickness of the outer layer of the end wall, which ensures that the material of the functional layer will mostly interact with certain gases, mainly oxygen and carbon dioxide, enclosed above a generally liquid product packaged within the container.

In another embodiment of the method of the present invention, the functional layer is a body included as an insert between the outer and inner layers of the end wall of the cap during a sequential injection overmoulding process using a mould with two cavities and a core. In this case, with the mould open, the body forming the functional layer is inserted, preferably using robotic means, into a first of said two cavities of the mould, where it is housed. Then the core is inserted in the first cavity and the plastic material forming the inner layer of the end wall of the cap is then injected through a first injection channel arranged along and through the core on the inner face of the insert. Finally, the core with the inner layer of the end wall formed thereon and the insert adhered to the inner layer of the end wall is removed from the first cavity and then inserted in the second cavity of the mould, where the plastic material forming the outer layer of the end wall, the skirt with the coupling configurations and the auxiliary closure configuration is injected through a second injection channel and on the outer face of the insert.

In yet another embodiment of the method of the present invention, the cap is made in two separate stages. A first stage comprises producing a flattened, generally disk-shaped element comprising the functional layer of plastic material and at least the inner layer of plastic material attached to one side of the functional layer. Alternatively, the flattened element can comprise the functional layer of plastic material, the inner layer of plastic material attached to one side of the functional layer and an intermediate layer of a plastic material attached to the other side of the functional layer opposite the inner layer. In one embodiment, the method comprises forming the flattened element with the functional layer completely encapsulated by the plastic materials of the inner and intermediate layers.

This flattened element with the encapsulated functional layer can be made by sequential injection overmoulding using a mould with two cavities and a composite core having a fixed part and a retractable part which can be moved between an extended position and a retracted position. With the core inserted in a first of the two cavities and the retractable part in the extended position, the plastic material of the functional layer is injected first through a first injection channel, then with the core still inserted in said first cavity but with the retractable part moved to the retracted position, the plastic material of the inner layer of the end wall is injected through a second injection channel, and finally the core with the functional layer and the inner layer of the end wall formed thereon is inserted in the second cavity where the plastic material forming the intermediate layer is injected through a third injection channel. Therefore, the plastic materials of the two inner and intermediate layers of the end wall of the cap are injected sequentially on opposite faces of the plastic material forming the functional layer, which has previously been injected first.

Alternatively, the flattened element with the encapsulated functional layer can be obtained by other melding techniques, for example by sequential injection melding of the inner and intermediate layers including the functional layer as an insert introduced in the corresponding cavity of the mould manually or by robotic means, or by conventional melding. Regardless of the process used for obtaining them, the flattened elements with the encapsulated functional layer can be easily stored for relatively long periods of time without the functional layer deteriorating, since the functional layer is externally protected by the inner and intermediate layers of plastic material, the functional layer being inert or less active than if it were not covered.

The flattened element with the non-encapsulated functional layer, either with only the inner layer attached to the functional layer or with the inner and intermediate layers attached to the functional layer, can be obtained, for example, by die-cutting an extruded composite sheet or by injection melding.

In cases in which the flattened element has the inner and intermediate layers attached to the functional layer, whether or not the latter is encapsulated, both inner and intermediate layers can be of the same type of plastic material (for example PE, EVA, SEBS) or of different types of plastic materials, being adapted in each case to the specifications of the end product.

A second stage of the method comprises positioning the previously described flattened element inside a cap injection mould, for example manually or by means of a robot, and overmoulding the plastic material of the outer layer on the functional layer if the flattened element only has the inner layer attached to the functional layer, or on the intermediate layer, if the flattened element has the two inner and intermediate layers attached to opposite sides of the functional layer. Correct adhesion between the outer layer and the flattened element containing the functional layer is achieved by suitably selecting the different plastic materials as mentioned above. It will be understood that when the flattened element has the two inner and intermediate layers attached to the functional layer, both inner and intermediate layers are preferably of identical thickness and made of the same plastic material such that their position is reversible, which allows positioning the flattened element in the mould without taking into account which of its sides is opposite the cavity.

The advantage of this embodiment of the two-stage method can be seen when mass production is needed since conventional cap injection moulds including a large number of melding cavities with a single injection channel for each cavity can be used, and even already existing moulds which are slightly modified to allow flattened elements as inserts can be used, for performing the second stage.

The cap obtained by means of the two-stage method comprises an end wall formed by the outer layer and the inner layer, and the embedded functional layer between the outer and inner layers of the end wall. The inner layer prevents the functional layer from coming into contact with the content of the container, but is sufficiently permeable so as to allow the functional layer to interact with the content of the container. The material of the outer layer further forms a skirt extending axially from a periphery of the end wall, coupling configurations on an inner surface of the skirt, and an auxiliary closure configuration extending axially from an inner surface of the end wall at a certain distance from the skirt. The functional layer is arranged in a region of the end wall inscribed within the perimeter of said auxiliary closure configuration. Optionally, the end wall includes an intermediate layer located between the functional layer and the outer layer. Optionally, the functional layer is encapsulated by the inner and intermediate layers.

When the functional layer is included in the form of an insert, the functional layer can be a barrier body made of a plastic or metal material, or it can be an electronic component, such as a chip or information code. For example, a prefabricated body of plastic material comprising a base polymer, such as for example ethylene vinyl acetate (EVA), combined with a chemical product capable of acting as a catalyst and/or activator against the action of one or more gases, can be used as a body forming the functional layer. In this case, if for example a plastic material based on polyethylene (PE) is used as the plastic material for the outer and inner layers of the end wall, the same excellent adhesion between the three layers is achieved as in the embodiment with the functional layer obtained by sequential injection overmoulding.

Generally, due to technical needs, the outer and inner layers of the end wall or the inner and intermediate layers of the flattened element are connected by at least one connection member formed at least partly with the plastic material of the outer layer or of the intermediate layer of the end wall through the functional layer. For example, when the technique of sequential injection overmoulding of three plastic materials including the plastic material forming the functional layer is used, the need to inject the plastic material forming the inner layer of the end wall under the functional layer leaves a hollow passage in the functional layer that is then filled with the plastic material of the outer layer of the end wall or with the plastic material of the intermediate layer of the flattened element, and forming the mentioned connection member in an off-centred position. When the technique of sequential injection overmoulding of two plastic materials on opposite sides of the functional layer provided in the form of an inclusion body is used, a protrusion is formed in the outer layer of the end wall in a central position cooperating with a central hole of the inclusion body to aid in positioning and retaining the latter in the corresponding melding cavity, and said protrusion forms the connection member in a central position.

### Brief Description of the Drawings

The preceding and other features and advantages will become more evident from the following detailed description of exemplary embodiments with reference to the accompanying drawings, in which:
Fig. 1 is a cross-sectional view of a moulded plastic cap with an embedded functional layer according to one embodiment of the present invention, which can be obtained by means of a method of sequential injection overmoulding of three plastic materials, where the functional layer is injected and where an auxiliary closure configuration defmes a sealing lip;
Fig. 2 is a cross-sectional view of a moulded plastic cap with an embedded functional layer according to another embodiment of the present invention, which can be obtained by means of a method of sequential injection overmoulding of two plastic materials, where the functional layer is an inclusion body and where an auxiliary closure configuration defines a sealing lip;
Fig. 3 is a cross-sectional view of a moulded plastic cap with an embedded functional layer according to one embodiment of the present invention, which can be obtained by means of a method of sequential injection overmoulding of three plastic materials, where the functional layer is injected and where an auxiliary closure configuration defines a circumferential rib;
Fig. 4 is a cross-sectional view of a moulded plastic cap with an embedded functional layer according to another embodiment of the present invention, which can be obtained by means of a method of sequential injection overmoulding of two plastic materials, where the functional layer is an inclusion body and where an auxiliary closure configuration defmes a circumferential rib;
Fig. 5 is a cross-sectional view of a moulded plastic cap with an embedded functional layer according to yet another embodiment of the present invention, which can be obtained by means of a method of sequential injection overmoulding of two or three plastic materials;
Fig. 6 is a cross-sectional view of a moulded plastic cap with an embedded functional layer according to another additional embodiment of the present invention, which can be obtained by means of a method of sequential injection overmoulding of two or three plastic materials;
Fig. 7 is a schematic diagram showing a first variant of an embodiment of the two-stage method of the present invention;
Fig. 8 is a schematic diagram showing a second variant of an embodiment of the two-stage method of the present invention;
Fig. 9 is a schematic diagram showing a third variant of an embodiment of the two-stage method of the present invention;
Fig. 10 is a schematic diagram showing a fourth variant of an embodiment of the two-stage method of the present invention;
Fig. 11 is a schematic diagram showing a fifth variant of an embodiment of the two-stage method of the present invention; and
Fig. 12 is a cross-sectional view of a moulded plastic cap with an embedded functional layer according to another embodiment of the present invention obtained by the variant of the method shown in Fig. 11.

### Detailed Description of Exemplary Embodiments

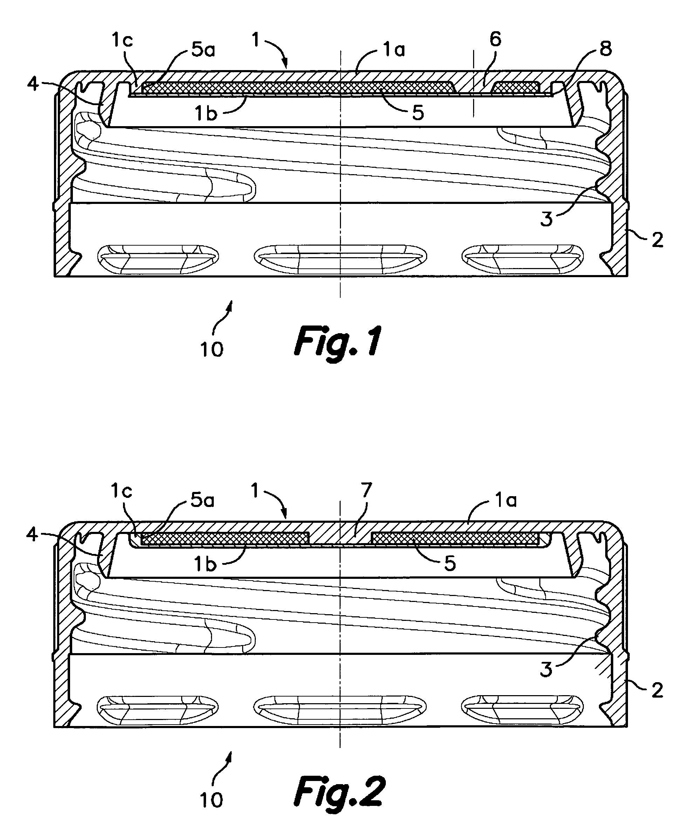

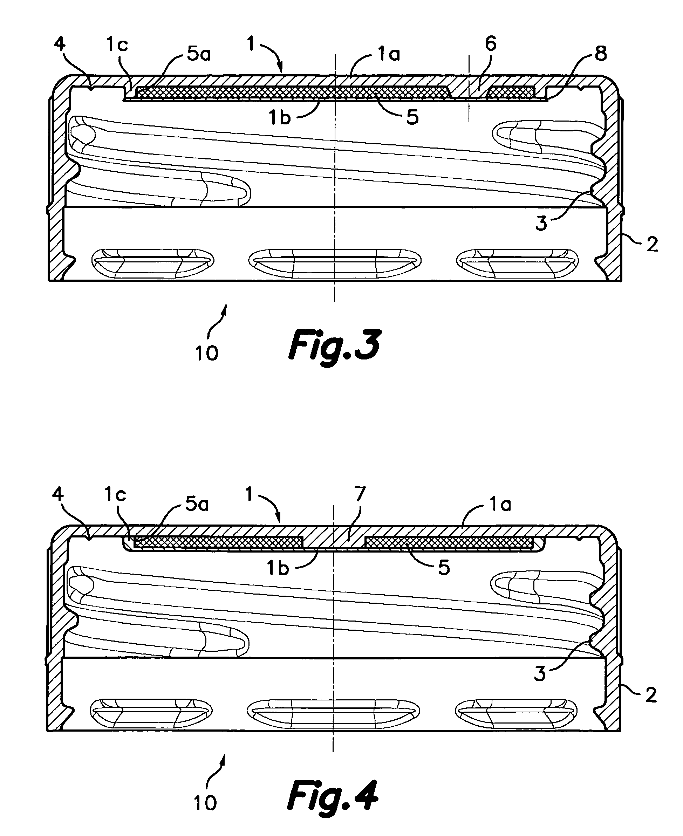

Referring first to Figs. 1 to 6, reference number 10 designates a moulded plastic cap with an embedded functional layer according to the present invention, which comprises an end wall 1 and a skirt 2 extending axially from a periphery of said end wall 1. Coupling configurations 3 capable of externally coupling with corresponding coupling configurations formed on an outer surface of a neck of a container (not shown) are formed on an inner surface of the mentioned skirt 2. In the examples shown, these coupling configurations 3 are inner threads, although they could alternatively provide a bayonet closure or the like. An auxiliary closure configuration 4 extends axially from an inner surface of the end wall 1, and at a distance from the skirt 2. In the examples shown in Figs. 1, 2, 5, and 6, said auxiliary closure configuration 4 defmes a sealing lip arranged to elastically press against an inner surface of the mentioned neck of said container. In the examples shown in Figs. 3 and 4, the auxiliary closure configuration 4 defines a circumferential rib arranged to be crushed by a front surface of the neck of the container.

The end wall 1 is formed by an outer layer la and an inner layer 1b in a region of the end wall 1 inscribed within the perimeter of said auxiliary closure configuration 4, and a functional layer 5 which is not exposed to the exterior is completely embedded between said outer la and inner 1b layers of the end wall 1 and within the perimeter of the auxiliary closure configuration 4. At least the mentioned outer 1a and inner 1b layers of the end wall 1 are obtained by sequential injection overmoulding of respective plastic materials through two different injection channels. The plastic materials of the outer 1a and inner 1b layers of the end wall 1 can be identical or different.

In all the embodiments shown in Figs. 1 to 6, the outer layer 1a of the end wall 1, the skirt 2 with the coupling configurations 3, and the auxiliary closure configuration 4 are integral with a plastic material injected from one of said two injection channels, and the inner layer 1b of the end wall 1 is made of another plastic material injected from the other one of the two injection channels. The plastic materials of the outer 1a and inner 1b layers of the end wall 1 preferably comprise the same base polymer or different base polymers which are compatible in terms of mutual adhesion. In a standard embodiment, the plastic materials of the outer 1a and inner 1b layers of the end wall 1 are identical and comprise polyethylene (PE) as the base polymer.

Now specifically in reference to Fig. 1, the embodiment shown therein can be obtained by sequential injection of three plastic materials through three different injection channels, one for forming the functional layer 5 and the other two for forming the outer 1a and inner 1b layers of the end wall 1 and other elements of the cap 10, as explained above. The functional layer 5 has a perimetral edge 5a surrounded, covered and closed by a perimetral wall 1c extending axially from the outer layer 1a of the end wall 1 and connected to the inner layer 1b of the end wall 1 such that the functional layer is completely embedded. This perimetral wall 1c is formed from the plastic material of the outer layer 1a of the end wall 1 and arranged at a distance from the auxiliary closure configuration 4, such that the sealing lip defined by it maintains its elastic capacity intact.

In the embodiment of Fig. 1, the functional layer 5 is obviously made of a mouldable plastic material comprising a base polymer combined with a chemical product capable of acting as a catalyst and/or activator to protect a packaged product within the container closed by the cap 10 against the action of one or more gases. The base polymer of the plastic material of the functional layer 5 can be, for example, ethylene vinyl acetate (EVA), which is compatible in terms of mutual adhesion with polyethylene (PE), which is the base polymer of the plastic material or plastic materials forming the outer 1a and inner 1b layers of the end wall 1. Polyethylene (PE) is relatively permeable to specific gases and completely impermeable to liquids and water vapour, such that the plastic material of the inner layer 1b of the end wall 1 is sufficiently permeable to certain gases so as to allow interaction between the plastic material of the functional layer 5 and the packaged product within the container and sufficiently impermeable to liquids and water vapour so as to ensure the closure of the packaged product within the container without coming into contact with the functional layer. Furthermore, assuming that the plastic materials of the outer 1 and inner 1b layers of the end wall 1 are identical, the thickness of the inner layer 1b of the end wall 1 is equal to or less than 0.5 times the thickness of the outer layer 1a of the end wall 1, for example from 0.2 to 0.3 times the thickness of the outer layer 1a, such that the plastic material of the functional layer 5 interacts mostly with the packaged product within the container through the inner layer 1b.

It will be observed that in the cap 10 according to the first embodiment shown in Fig. 1, there is a connection member 6 made integrally of the material of the outer layer 1a of the end wall 1 and extending axially therefrom through the functional layer 5 until connecting with the inner layer 1b of the end wall 1. This connection member 6 is generally off-centred and is the result of making the cap 10 using a technique of sequential injection overmoulding of three plastic materials through three different injection channels using a mould with two cavities and a retractable core (core-back technique), where a spout for injecting the inner layer 1b of the end wall 1 through the functional layer 5 leaves a hollow in the functional layer 5 that is then refilled with the plastic material of the outer layer 1a of the end wall. The inner layer 1b of the end wall 1 has a perimetral edge 8 projecting radially out from the perimetral wall 1c and serving to aid in retaining the inner layer 1b of the end wall 1 and the functional layer 5 adhered thereto on the core when the core is removed from the first cavity of the mould and inserted in the second cavity.

Now in relation to Fig. 2, a plastic cap 10 according to another embodiment of the present invention is shown, which is designed to be obtained using a technique of sequential injection overmoulding of two plastic materials through two different injection channels, one for each of the outer 1a and inner 1b layers of the end wall 1, and where the functional layer 5 is a body housed as an insert between outer 1a and inner 1b layers of the end wall 1 during the process of overmoulding. In this case, a mould with two cavities and a core, with an injection channel associated with one of the cavities and the other injection channel arranged along and through the core is used. The cap 10 has a connection member 7 made integrally of the material of the outer layer 1a of the end wall 1 and extending axially therefrom through the functional layer 5 until connecting with the inner layer 1b of the end wall 1. The purpose of this connection member 7 is to retain the body forming the insert inside one of the cavities of the mould before the core is inserted therein and a plastic material injected for forming the inner layer 1b of the end wall 1 on a face of the insert. The body forming the functional layer 5 in the form of an insert is prefabricated with a central hole sized to cooperate with a retention member projecting from the centre of the cavity of the mould, and this retention member will leave a hollow through the insert that will be refilled by the plastic material of the outer layer 1a of the end wall 1 during the subsequent injection thereof into the other cavity of the mould.

The insert forming the functional layer 5 can be a prefabricated body made of a plastic material, a body made of a metal material, or an electronic component, among others. In one embodiment, the insert forming the functional layer 5 is made of a plastic material comprising a base polymer such as ethylene vinyl acetate (EVA) combined with a chemical product capable of acting as a catalyst and/or activator, and the outer 1a and inner 1b layers of the end wall 1 are made of plastic materials having polyethylene (PE), which is compatible in terms of mutual adhesion with the ethylene vinyl acetate (EVA) of the functional layer 5, as the base polymer. Optionally, the plastic materials of the outer 1a and inner 1b layers of the end wall 1 can be identical. In this embodiment of Fig. 2, the thickness ratio with respect to the outer 1a and inner 1b layers of the end wall 1 is similar to that described above in relation to Fig. 1 to achieve similar permeability performances.

In the cap 10 shown in Fig. 2, a perimetral wall 1c surrounding, covering and closing the perimetral edge 5a of the functional layer 5 extends axially from the inner layer 1b of the end wall 1 and is connected to the outer layer 1a of the end wall 1, such that the functional layer is completely embedded. This perimetral wall 1c is formed from the plastic material of the inner layer 1b of the end wall 1 and arranged at a distance from the auxiliary closure configuration 4, such that the sealing lip defmed by it maintains its elastic capacity intact.

Fig. 3 shows a cap 10 according to another embodiment of the present invention which is similar in all aspects to that described above in relation to Fig. 1, except in that the auxiliary closure configuration 4 here is a circumferential closing rib instead of a sealing lip. The mentioned circumferential rib forming the auxiliary closure configuration 4 projects axially inwards from the end wall 1, in such a position that this circumferential rib is crushed axially by a front surface of the neck of the container (not shown) when the cap 10 is tightly threaded on the neck of the container, thereby ensuring a leak-tight closure between said front surface of the neck of the container and the end wall 1 of the cap 10 in accordance with relative elasticity of the material of the outer layer 1a of the end wall 1 forming the circumferential closing rib.

Fig. 4 shows a cap 10 according to another embodiment of the present invention which is similar in all aspects to that described above in relation to Fig. 2, except in that the auxiliary closure configuration 4 here is a circumferential closing rib instead of a sealing lip, this circumferential closing rib being similar to that described above in relation to Fig. 3.

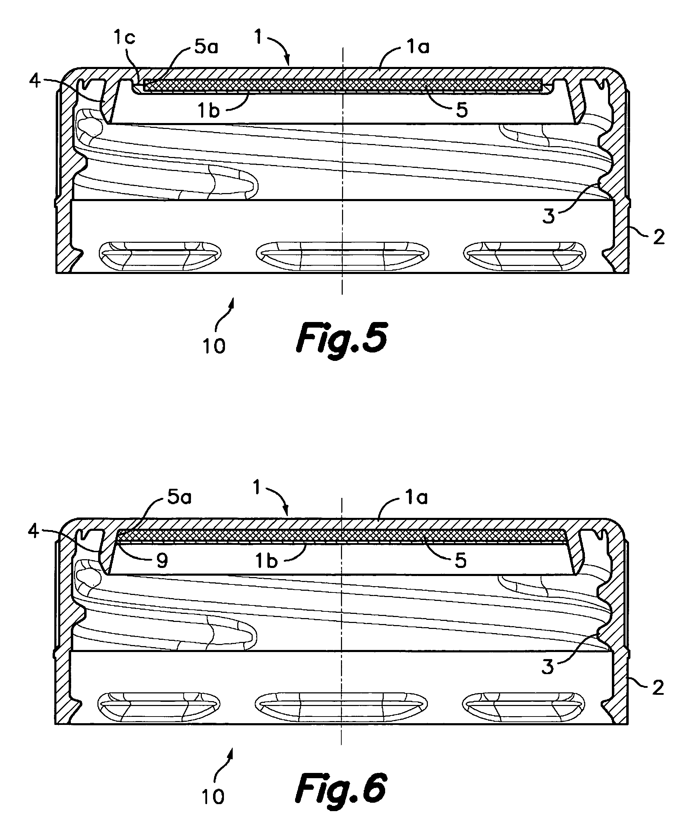

Fig. 5 shows another alternative embodiment of the cap 10 of the present invention, in which the outer layer 1a of the end wall 1, the skirt 2 with the coupling configurations 3, and the auxiliary closure configuration 4 are integral with a plastic material injected from an injection channel and the inner layer 1b of the end wall 1 is made of another plastic material injected from another injection channel. The functional layer 5 can be injected from a third injection channel or included as an insert during the sequential injection overmoulding process. The plastic materials of the outer 1a and inner 1b layers of the end wall 1 and the nature of the functional layer 5 can be according to the alternatives described above. The connection member 6 or 7 can be present even though it has not been depicted. The difference with respect to the embodiments shown in Figs. 1 and 2 is that here, the perimetral wall 1c surrounding, covering and closing the perimetral edge 5a of the functional layer 5 is formed partly with the plastic material of the outer layer 1a of the end wall 1 and partly with the plastic material of the inner layer 1b of the end wall 1.

Fig. 6 shows another alternative embodiment of the cap 10 of the present invention, in which the outer layer 1a of the end wall 1, the skirt 2 with the coupling configurations 3, and the auxiliary closure configuration 4 are integral with a plastic material injected from an injection channel and the inner layer 1b of the end wall 1 is made of another plastic material injected from another injection channel. The functional layer 5 can be injected from a third injection channel or included as an insert during the sequential injection overmoulding process. The plastic materials of the outer 1a and inner 1b layers of the end wall 1 and the nature of the functional layer 5 can be according to the alternatives described above. The connection member 6 or 7 can be present even though it has not been depicted. The difference with respect to the embodiments shown in Figs. 1, 2 and 3 is that here, the perimetral edge 5a of the functional layer 5 is connected to the auxiliary closure configuration 4 and the inner layer 1b of the end wall 1 also has a perimetral edge 9 connected to the auxiliary closure configuration 4. Therefore, the perimetral wall surrounding, covering and closing the perimetral edge 5a of the functional layer 5 is formed by the auxiliary closure configuration 4 itself, which is made of the plastic material of the outer layer 1a of the end wall 1.

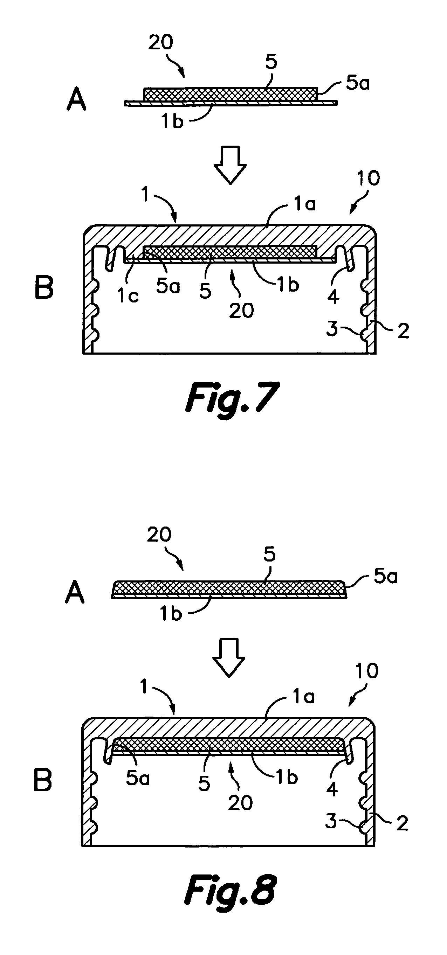

Another embodiment of the method of manufacturing a moulded plastic cap with an embedded functional layer according to the present invention, which comprises two stages A and B and allows different variants, is now described in relation to Figs. 7 to 11.

In the first variant of Fig. 7, the method comprises a first stage A consisting of forming a preferably disk-shaped flattened element 20, including a functional layer 5 and an inner layer 1b of a plastic material attached to one side of said functional layer 5. The other opposite side and a perimetral edge 5a of the functional layer 5 are exposed.

The flattened element 20 can be obtained by an injection overmoulding process where the functional layer 5 is made of a plastic material injected through an injection channel and the plastic material of the inner layer 1b is injected through another injection channel, or alternatively the functional layer 5 is a body which can be included as an insert during an injection overmoulding process in which the plastic material of the inner layer 1a is injected through an injection channel. Alternatively, the flattened element 20 can be obtained by die-cutting from an extruded, composite, multilayer sheet with one layer of plastic material laminated on a face of a functional layer.

Then, the first variant of the method comprises a second stage B consisting of introducing the flattened element 20 in a mould and overmoulding an outer layer 1a with another plastic material injected through another injection channel on said flattened element 20. The flattened element 20 is placed such that said outer layer 1a is attached to the other side of the functional layer 5 opposite the inner layer 1b. Both outer 1a and inner 1b layers form an end wall 1 of the cap and the functional layer 5 is encapsulated between the outer 1a and inner 1b layers of the end wall 1. Therefore, the functional layer 5 is not exposed. The plastic material of the outer layer 1a further forms a skirt 2 extending axially from a periphery of said end wall 1, coupling configurations 3 on an inner surface of said skirt 2, and an auxiliary closure configuration 4 extending axially from an inner surface of the end wall 1.

The mentioned auxiliary closure configuration 4 defines a perimetral sealing lip, there being a certain distance between the auxiliary closure configuration 4 and the skirt 2. The functional layer 5 is arranged in a region of the end wall 1 inscribed within the perimeter of said auxiliary closure configuration 4. Said coupling configurations 3 can be, for example, in the form of one or more threads configured for externally coupling with corresponding coupling configurations formed on an outer surface of a neck of a container.

The first variant of the method shown in Fig. 7 comprises covering and closing the mentioned perimetral edge 5a of the functional layer 5 by means of a perimetral wall 1c during the step of overmoulding the outer layer 1a. The mentioned perimetral wall 1c is connected to the outer 1a and inner 1b layers of the end wall 1 and arranged such that there is a certain distance between said wall perimetral 1c and the auxiliary closure configuration 4. In the cap 10 of the first variant of Fig. 7, the perimetral wall 1c is formed with the plastic material of the outer layer 1a of the end wall 1. Alternatively, the perimetral wall 1c can be formed with the plastic material of the inner layer 1b of the end wall 1, or partly with the plastic material of the outer layer 1a and partly with the plastic material of the inner layer 1b of the end wall 1.

The cap 10 obtained by means of the first variant of the method shown in Fig. 7 is similar to that described above in relation to any of Figs. 1 to 5, even though the method of manufacture is different. Therefore, the auxiliary closure configuration 4 of Fig. 7 can alternatively have the form of a perimetral closure rib as in Fig. 3 and 4 instead of the sealing lip. Nevertheless, the cap 10 obtained by means of the first variant of the method shown in Fig. 7 does not include the off-centred connection member 6 or centred connection member 7 made of the material of the outer layer 1a through the functional layer, as in Figs. 1 to 4.

Fig. 8 shows a second variant of the embodiment of the method of the present invention comprising first and second stages A, B, which are similar in all aspects to those of the first variant described above in relation to Fig. 7, except in that it comprises during the step of overmoulding the outer layer 1a in the second stage B covering and closing the perimetral edge 5a of the functional layer 5 by means of the material of the auxiliary closure configuration 4, and connecting a perimetral edge 9 of the inner layer 1b of the end wall 1 to the auxiliary closure configuration 4.

The cap 10 obtained by means of the second variant of the method shown in Fig. 8 is similar to that described above in relation to Fig. 6 even though the method of manufacture is different. It will be observed that the cap 10 here does not have the perimetral wall 1c.

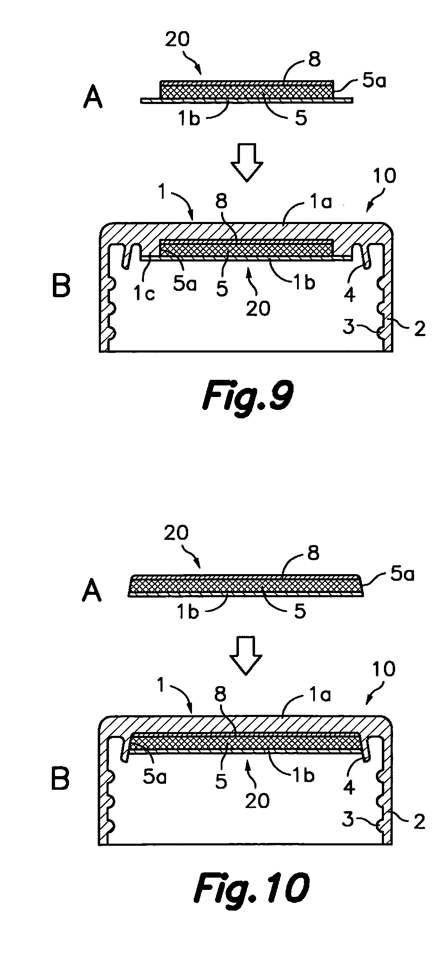

Fig. 10 shows a third variant of the embodiment of the method of the present invention comprising first and second stages A, B. Here, the first stage A comprises forming a flattened, generally disk-shaped element 20 formed by a functional layer 5, an inner layer 1b of a plastic material attached to one side of the functional layer 5 and an intermediate layer 8 of a plastic material attached to the other side of the functional layer 5 opposite the inner layer 1b. A perimetral edge 5a of the functional layer 5 is exposed.

The flattened element 20 can be obtained by an injection overmoulding process where the functional layer 5 is of a plastic material injected through an injection channel and the plastic materials of the inner 1b and intermediate 8 layers are injected through two other injection channels, or alternatively the functional layer is a body that can be included as an insert during an injection overmoulding process in which the plastic materials of the inner 1b and intermediate 8 layers are injected through respective injection channels. Alternatively the flattened element 20 can be obtained by die-cutting from an extruded, composite, multilayer sheet of two layers of plastic material laminated on opposite faces of a functional layer.

Then, the third variant of the method comprises a second stage B consisting of introducing the flattened element 20 in a mould and overmoulding an outer layer 1awith another plastic material injected through another injection channel on said flattened element 20. The flattened element 20 is placed such that said outer layer 1a is attached to the intermediate layer 8, and the intermediate layer 8 is located between the functional layer 5 and the outer layer 1a. The outer 1a, intermediate 8 and inner 1b layers form an end wall 1 of the cap and the functional layer 5 is encapsulated between the inner 1b and intermediate 8 layers of the end wall 1. Therefore, the functional layer 5 is not exposed. The plastic material of the outer layer 1a further forms a skirt 2 extending axially from a periphery of said end wall 1, coupling configurations 3 on an inner surface of said skirt 2, and an auxiliary closure configuration 4 extending axially from an inner surface of the end wall 1, there being a certain distance between the auxiliary closure configuration 4 and the skirt 2. The functional layer 5 is arranged in a region of the end wall 1 inscribed within the perimeter of said auxiliary closure configuration 4.

The third variant of the method shown in Fig. 9 comprises covering and closing the mentioned perimetral edge 5a of the functional layer 5 by means of a perimetral wall 1c during the step of overmoulding the outer layer 1a in the second stage B. The mentioned perimetral wall 1c is connected to the outer 1a and inner 1b layers of the end wall 1. There is a certain distance between said perimetral wall 1c and the auxiliary closure configuration 4. In the cap 10 of the third variant of Fig. 9, the perimetral wall 1c is formed with the plastic material of the outer layer 1a of the end wall 1. Alternatively, the perimetral wall 1 can be formed with the plastic material of the inner layer 1b of the end wall 1, or partly with the plastic material of the outer layer 1a and partly with the plastic material of the inner layer 1b of the end wall 1.

The cap 10 obtained by means of the third variant of the method shown in Fig. 9 is similar to that described above in relation to Figs. 1 to 5, even though the method of manufacture is different, and with the addition of the intermediate layer 8 located between the functional layer 5 and the outer layer 1a. Therefore, the auxiliary closure configuration 4 of Fig. 9 can alternatively have the form of a perimetral closure rib as in Fig. 3 and 4 instead of the sealing lip. If the flattened element 20 is obtained by a sequential injection overmoulding process, the cap 10 obtained by means of the third variant of the method shown in Fig. 9 can include a centred or off-centred connection member (not shown) similar to the connection members 6, 7 described above in relation to Figs. 1 to 4, although in this case the connection member would be made of the material of the intermediate layer 8 through the functional layer 5.

Fig. 10 shows a fourth variant of the embodiment of the method of the present invention comprising first and second stages A, B, which are similar in all aspects to those of the third variant described above in relation to Fig. 9 except in that it comprises during the step of overmoulding the outer layer 1a in the second stage B, covering and closing the perimetral edge 5a of the functional layer 5 by means of the material of the auxiliary closure configuration 4, and connecting a perimetral edge 9 of the inner layer 1b of the end wall 1 to the auxiliary closure configuration 4.

The cap 10 obtained by means of the fourth variant of the method shown in Fig. 10 is similar to that described above in relation to Fig. 6 even though the method of manufacture is different, and with the addition of the intermediate layer 8 located between the functional layer 5 and the outer layer 1a. Here it will be observed that the cap 10 does not have the perimetral wall 1c.

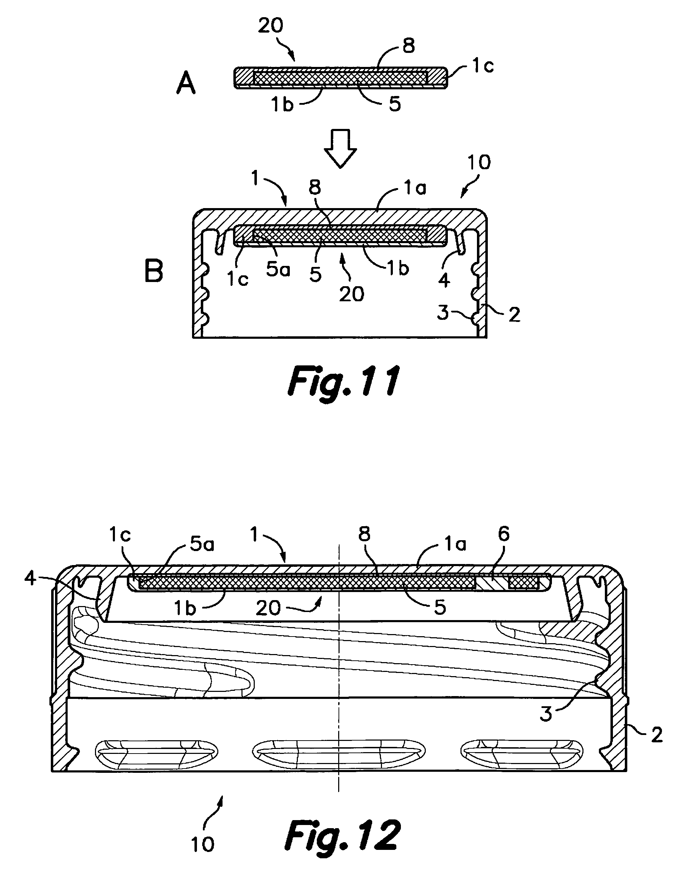

Fig. 11 shows a fifth variant of the embodiment of the method of the present invention comprising first and second stages A, B, which are similar in all aspects to those of the third variant described above in relation to Fig. 9 except in that the first stage A comprises completely encapsulating the functional layer 5 between the inner 1b and intermediate 8 layers by means of the formation of a perimetral wall 1c covering and closing the perimetral edge 5a of the functional layer 5. Said perimetral wall 1c is connected to the inner lb and intermediate 8 layers. In the example shown in Fig. 11, the perimetral wall 1c is formed with the plastic material of the intermediate layer 8 of the flattened element 20. Alternatively, the perimetral wall 1c can be formed with the plastic material of the inner layer 1b of the flattened element 20, or partly with the plastic material of the intermediate layer 8 and partly with the plastic material of the inner layer 1b of the flattened element 20.

Fig. 12 shows a cap 10 obtained by means of the fifth variant of the method shown in Fig. 11. The cap 10 of Fig. 12 comprises an end wall 1 formed by outer 1a, intermediate 8 and inner lb layers of respective plastic materials. A functional layer 5 is encapsulated between the inner 1b and intermediate 8 layers of the end wall 1. A perimetral edge 5a of the functional layer 5 is covered and closed by a perimetral wall 1c formed with the material of the inner layer 1b, such that the functional layer 5 is not exposed. The plastic material of the outer layer 1a further forms a skirt 2 extending axially from a periphery of said end wall 1, coupling configurations 3 on an inner surface of said skirt 2, and an auxiliary closure configuration 4 extending axially from an inner surface of the end wall 1. There is a certain distance between the auxiliary closure configuration 4 and the skirt 2. The functional layer 5 is arranged in a region of the end wall 1 inscribed within the perimeter of said auxiliary closure configuration 4.

Preferably, the inner 1b and intermediate 8 layers are of identical thickness and made of the same plastic material, such that the flattened element is reversible. The cap 10 includes an off-centred connection member 6 connecting the inner 1b and intermediate 8 layers through the functional layer 5. In Fig. 12, said off-centred connection member 6 is made of the plastic material of the inner layer 1b, but given the reversible character of the flattened element, it could likewise be formed from the plastic material of the outer layer 8 and is a result of the manufacture of the flattened element 20 by a sequential injection overmoulding process and with the functional layer made of a plastic material injected during said process, as described above. If the flattened element 20 was obtained by a sequential injection overmoulding process and with the functional layer introduced as an insert during said process, the flattened element could include a centred connection member, as described above.

The plastic materials of the outer 1a, inner 1b and intermediate 8 layers, as well as the plastic material of the functional layer 5, preferably have a common base polymer selected from a group including polyethylene (PE), ethylene vinyl acetate (EVA) and styrene-ethylene/butadienestyrene (SEBS). The thickness of the inner layer 1b of the end wall 1 is preferably equal to or less than 0.5 times the thickness of the outer layer 1a of the end wall 1.

A person skilled in the art will be capable of making modifications and variations from the embodiments shown and described without departing from the scope of the present invention as defined in the attached claims.

## Claims

1. A method of manufacturing a moulded plastic cap with an embedded functional layer, comprising the steps of:
forming a flattened element (20) including a functional layer (5) and at least one inner layer (Ib)ofa plastic material attached to said functional layer (5);
introducing said flattened element (20) in a mould; and
overmoulding an outer layer (1a) with another plastic material injected through an injection channel on said flattened element (20), where said outer and inner layers (1a, 1b) form an end wall (1) of said cap in which said functional layer (5) is not exposed and is located between the outer and inner layers (la, 1 b); and
forming with said plastic material of the outer layer (1a) a skirt (2) extending axially from a periphery of said end wall (1).

2. The method according to claim 1, **characterized in that** it comprises forming with said plastic material of the outer layer (1a) on an inner surface of said skirt (2) coupling configurations (3) configured for externally coupling with corresponding coupling configurations formed on an outer surface of a neck of a container.

3. The method according to claim 2, **characterized in that** it comprises forming with said plastic material of the outer layer (la) an auxiliary closure configuration (4) extending axially from an inner surface of the end wall (1) at a distance from the skirt (2), said functional layer (5) being arranged in a region of the end wall (1) inscribed within the perimeter of said auxiliary closure configuration (4).

4. The method according to claim 3, **characterized in that** it comprises forming said inner layer (1b) by injecting the corresponding plastic material through another injection channel other than the mentioned injection channel through which the plastic material of the outer layer (la) is injected, the functional layer (5) being embedded in said end wall (1) between the outer and inner layers (1a, 1b) of the end wall (1).

5. The method according to claim 3, **characterized in that** it comprises forming at least said outer (1a) and inner (1b) layers of the end wall (1) by sequential injection overmoulding of respective identical or different plastic materials through two different injection channels, the functional layer (5) being embedded in said end wall (1) between the outer and inner layers (1a, 1b) of the end wall (1).

6. The method according to any one of the preceding claims, **characterized in that** it comprises covering and closing a perimetral edge (5a) of the functional layer (5) by means of a perimetral wall (1c) connected to the outer and inner layers (1a, 1b) of the end wall (1) and arranged at a distance from the auxiliary closure configuration (4) during the step of overmoulding the outer layer (1a).

7. The method according to claim 6, **characterized in that** it comprises forming said perimetral wall (1c) with the plastic material of the outer layer (1a) of the end wall (1), or with the plastic material of the inner layer (1b) of the end wall (1), or partly with the plastic material of the outer layer (1a) of the end wall (1) and partly with the plastic material of the inner layer (1b) of the end wall (1).

8. The method according to any one of claims 1 to 5, **characterized in that** it comprises covering and closing a perimetral edge (5a) of the functional layer (5) by means of the auxiliary closure configuration (4) and connecting a perimetral edge (9) of the inner layer (1b) of the end wall (1) to the auxiliary closure configuration (4) during the step of overmoulding the outer layer (1a).

9. The method according to any one of the preceding claims, **characterized in that** it comprises forming the functional layer (5) from yet another plastic material injected through yet another injection channel during a sequential injection overmoulding process.

10. The method according to any one of claims 5 to 8, **characterized in that** it comprises including the functional layer (5) as an insert between the outer (1a) and inner (1b) layers of the end wall (1) during a sequential injection overmoulding process, said body being selected from a group comprising a body made of a plastic material, a body made of a metal material, and an electronic component.

11. The method according to any one of the preceding claims, **characterized in that** it comprises connecting the outer (1a) and inner (1b) layers of the end wall (1) by at least one connection member (6, 7) through the functional layer (5), said connection member (6, 7) being formed at least partly with the plastic material of the outer layer (1a) of the end wall (1).

12. The method according to any one of claims 1 to 3, **characterized in that** it comprises forming said flattened element (20) with an intermediate layer (8) of a plastic material attached to one side of the functional layer (5) opposite the inner layer (1b), introducing the flattened element (20) in said mould, and overmoulding the outer layer (1a) on said intermediate layer (8).

13. The method according to claim 12, **characterized in that** it comprises covering and closing a perimetral edge (5a) of the functional layer (5) by means of a perimetral wall (1e) connected to the outer and inner layers (1a, 1b) of the end wall (1) and arranged at a distance from the auxiliary closure configuration (4) during the step of overmoulding the outer layer (1a).

14. The method according to claim 13, **characterized in that** it comprises forming said perimetral wall (1c) of the plastic material of the outer layer (1a) of the end wall (1), or with the plastic material of the inner layer (1b) of the end wall (1), or partly with the plastic material of the outer layer (1a) of the end wall (1) and partly with the plastic material of the inner layer (1b) of the end wall (1).

15. The method according to claim 12, **characterized in that** it comprises covering and closing a perimetral edge (5a) of the functional layer (5) by means of the auxiliary closure configuration (4) and connecting a perimetral edge (9) of the inner layer (1b) of the end wall (1) to the auxiliary closure configuration (4) during the step of overmoulding the outer layer (1a).

16. The method according to claim 12, **characterized in that** it comprises forming the inner and intermediate layers (1b, 8) of the flattened element (20) by sequential injection overmoulding of respective identical or different plastic materials through two different injection channels.

17. The method according to claim 16, **characterized in that** it comprises forming the functional layer (5) of yet another plastic material injected through yet another injection channel during said sequential injection overmoulding process.

18. The method according to claim 16, **characterized in that** it comprises including the functional layer (5) as an insert between the inner and intermediate layers (1b, 8) of the flattened element (20) during said sequential injection overmoulding process, said body being selected from a group comprising a body made of a plastic material, a body made of a metal material, and an electronic component.

19. The method according to any one of claims 16 to 18, **characterized in that** it comprises covering and closing a perimetral edge (5a) of the functional layer (5) by means of a perimetral wall (1c) connected to the inner and intermediate layers (1b, 8) during the step of overmoulding the outer layer (1a), the functional layer (5) being not exposed and being encapsulated between the inner and intermediate layers (1b, 8) of the flattened element (20).

20. The method according to claim 19, **characterized in that** it comprises forming said perimetral wall (1c) from the plastic material of the inner layer (1b), or with the plastic material of the intermediate layer (8), or partly with the plastic material of the inner layer (1b) and partly with the plastic material of the intermediate layer (8).

21. The method according to any one of the preceding claims, **characterized in that** it comprises forming the functional layer (5) from a plastic material comprising a base polymer combined with a chemical product capable of acting as a catalyst and/or activator to protect a packaged product within a container closed by the cap against the action of one or more gases.

22. The method according to any one of the preceding claims, **characterized in that** the respective plastic materials of the outer, inner and intermediate layers (la, 1b, 8) and the plastic material of the functional layer (5) comprise the same base polymer or different base polymers which are compatible in terms of mutual adhesion.

23. The method according to claim 22, **characterized in that** said base polymer/polymers of the plastic materials of the outer, inner and intermediate layers (1a, 1b, 8) and of the plastic material of the functional layer (5) is/are selected from a group including polyethylene (PE), ethylene vinyl acetate (EVA) and styrene-ethylene/butadiene-styrene (SEBS).

24. The method according to claim 22 or 23, **characterized in that** the respective plastic materials of the outer, inner and intermediate layers (1a, 1b, 8) are identical.

25. The method according to any one of claims 22 to 23, **characterized in that** the plastic material of the inner layer (1b) is sufficiently permeable to certain gases so as to allow interaction between the plastic material of the functional layer (5) and said packaged product within the container, and sufficiently impermeable to liquids so as to ensure the closure of the packaged product within the container without coming into contact with the functional layer (5).

26. The method according to any one of the preceding claims, **characterized in that** the thickness of the inner layer (1b) of the end wall (1) is equal to or less than 0.5 times the thickness of the outer layer (1a) of the end wall (1).

27. The method according to any one of claims 12 to 26, **characterized in that** the inner and intermediate layers (1b, 8) are of identical thickness and made of the same plastic material.

28. The method according to any one of the preceding claims, **characterized in that** said auxiliary closure configuration (4) is selected from a group comprising a sealing lip arranged to elastically press against an inner surface of said neck of said container, and a circumferential rib arranged to be axially crushed by a front surface of the neck of the container.

29. A moulded plastic cap with an embedded functional layer, **characterized in that** it is obtained by means of the method of any one of the preceding claims.

## Amended claims

### Amended claims under Art. 19.1 PCT

**1.** A method of manufacturing a moulded plastic cap with an embedded functional layer, comprising integrating a functional layer (5) between an outer layer (1a) and an inner layer (1b) of an end wall (1) of a cap such that said functional layer (5) is not exposed, wherein said inner layer (1b) is made of a plastic material and attached to said functional layer (5) both forming a flattened element (20), and said outer layer (1a) is overmoulded with another plastic material injected through an injection channel, and wherein said plastic material of the outer layer (1a) form a skirt (2) extending axially from a periphery of said end wall (1) of the cap, **characterized in that** the inner layer (1b) is obtained by injecting the corresponding plastic material through another injection channel other than the mentioned injection channel through which the plastic material of the outer layer (1a) is injected.

**2.** The method according to claim 1, **characterized in that** it comprises forming with said plastic material of the outer layer (1a) on an inner surface of said skirt (2) coupling configurations (3) configured for externally coupling with corresponding coupling configurations formed on an outer surface of a neck of a container.

**3.** The method according to claim 2, **characterized in that** it comprises forming with said plastic material of the outer layer (1a) an auxiliary closure configuration (4) extending axially from an inner surface of the end wall (1) at a distance from the skirt (2), said functional layer (5) being arranged in a region of the end wall (1) inscribed within the perimeter of said auxiliary closure configuration (4).

**4.** The method according to claim 1, 2 or 3, **characterized in that** it comprises forming at least said outer (1a) and inner (1b) layers of the end wall (1) by sequential injection overmoulding of respective identical or different plastic materials through two different injection channels.

**5.** The method according to claim 3 or 4, **characterized in that** it comprises covering and closing a perimetral edge (5a) of the functional layer (5) by means of a perimetral wall (1c) connected to the outer and inner layers (1a, 1b) of the end wall (1) and arranged at a distance from the auxiliary closure configuration (4).

**6.** The method according to claim 5, **characterized in that** it comprises forming said perimetral wall (1c) with the plastic material of the outer layer (1a) of the end wall (1), or with the plastic material of the inner layer (1b) of the end wall (1), or partly with the plastic material of the outer layer (1a) of the end wall (1) and partly with the plastic material of the inner layer (1b) of the end wall (1).

**7.** The method according to claim 3 or 4, **characterized in that** it comprises covering and closing a perimetral edge (5a) of the functional layer (5) by means of the auxiliary closure configuration (4) and connecting a perimetral edge (9) of the inner layer (1b) of the end wall (1) to the auxiliary closure configuration (4).

**8.** The method according to any one of the preceding claims, **characterized in that** it comprises forming the functional layer (5) from yet another plastic material injected through yet another injection channel during a sequential injection overmoulding process.

**9.** The method according to any one of claims 1 to 7, **characterized in that** it comprises including the functional layer (5) as an insert between the outer (1a) and inner (1b) layers of the end wall (1) during a sequential injection overmoulding process, said insert being selected from a group comprising a body made of a plastic material, a body made of a metal material, and an electronic component.

**10.** The method according to any one of the preceding claims, **characterized in that** it comprises connecting the outer (1a) and inner (1b) layers of the end wall (1) by at least one connection member (6, 7) through the functional layer (5), said connection member (6, 7) being formed at least partly with the plastic material of the outer layer (1a) of the end wall (1).

**11.** The method according to any one of claims 1 to 3, **characterized in that** it comprises forming said flattened element (20) with an intermediate layer (8) of a plastic material attached to one side of the functional layer (5) opposite the inner layer (1b), introducing the flattened element (20) in a mould, and overmoulding the outer layer (1a) on said intermediate layer (8).

**12.** The method according to claim 11, **characterized in that** it comprises covering and closing a perimetral edge (5a) of the functional layer (5) by means of a perimetral wall (1c) connected to the outer and inner layers (1a, 1b) of the end wall (1) and arranged at a distance from the auxiliary closure configuration (4).

**13.** The method according to claim 12, **characterized in that** it comprises forming said perimetral wall (1c) with the plastic material of the outer layer (1a) of the end wall (1), or with the plastic material of the inner layer (1b) of the end wall (1), or partly with the plastic material of the outer layer (1a) of the end wall (1) and partly with the plastic material of the inner layer (1b) of the end wall (1).

**14.** The method according to claim 11, **characterized in that** it comprises covering and closing a perimetral edge (5a) of the functional layer (5) by means of the auxiliary closure configuration (4) and connecting a perimetral edge (9) of the inner layer (1b) of the end wall (1) to the auxiliary closure configuration (4).

**15.** The method according to claim 11, **characterized in that** it comprises forming the inner and intermediate layers (1b, 8) of the flattened element (20) by sequential injection overmoulding of respective identical or different plastic materials through two different injection channels.

**16.** The method according to claim 15, **characterized in that** it comprises forming the functional layer (5) from yet another plastic material injected through yet another injection channel during said sequential injection overmoulding process.

**17.** The method according to claim 15, **characterized in that** it comprises including the functional layer (5) as an insert between the inner and intermediate layers (1b, 8) of the flattened element (20) during said sequential injection overmoulding process, said insert being selected from a group comprising a body made of a plastic material, a body made of a metal material, and an electronic component.

**18.** The method according to claim 15, 16 or 17, **characterized in that** it comprises covering and closing a perimetral edge (5a) of the functional layer (5) by means of a perimetral wall (1c) connected to the inner and intermediate layers (1b, 8).

**19.** The method according to claim 18, **characterized in that** it comprises forming said perimetral wall (1c) with the plastic material of the inner layer (1b), or with the plastic material of the intermediate layer (8), or partly with the plastic material of the inner layer (1b) and partly with the plastic material of the intermediate layer (8).

**20.** The method according to any one of the preceding claims, **characterized in that** it comprises forming the functional layer (5) from a plastic material comprising a base polymer combined with a chemical product capable of acting as a catalyst and/or activator to protect a product packaged in a container closed by the cap against the action of one or more gases.

**21.** The method according to any one of the preceding claims, **characterized in that** the respective plastic materials of the outer, inner and intermediate layers (1a, 1b, 8) and the plastic material of the functional layer (5) comprise the same base polymer or different base polymers compatible in terms of mutual adhesion.

**22.** The method according to claim 21, **characterized in that** said base polymer/polymers of the plastic materials of the outer, inner and intermediate layers (1a, 1b, 8) and of the plastic material of the functional layer (5) is/are selected from a group including polyethylene (PE), ethylene vinyl acetate (EVA) and styrene-ethylene/butadiene-styrene (SEBS).

**23.** The method according to claim 21 or 22, **characterized in that** the respective plastic materials of the outer, inner and intermediate layers (1a, 1b, 8) are identical.

**24.** The method according to any one of claims 21 to 24, **characterized in that** the plastic material of the inner layer (1b) is sufficiently permeable to certain gases so as to allow interaction between the plastic material of the functional layer (5) and said product packaged in the container, and sufficiently impermeable to liquids so as to ensure the closure of the product packaged in the container without coming into contact with the functional layer (5).

**25.** The method according to any one of the preceding claims, **characterized in that** the thickness of the inner layer (1b) of the end wall (1) is equal to or less than 0.5 times the thickness of the outer layer (1a) of the end wall (1).

**26.** The method according to any one of claims 11 to 25, **characterized in that** the inner and intermediate layers (1b, 8) are of identical thickness and made of the same plastic material.

**27.** The method according to any one of the preceding claims, **characterized in that** said auxiliary closure configuration (4) is selected from a group comprising a sealing lip arranged to elastically press against an inner surface of said neck of said container, and a circumferential rib arranged to be axially crushed by a front surface of the neck of the container.

**28.** A moulded plastic cap with an embedded functional layer, **characterized in that** it is obtained by means of the method of any one of the preceding claims.
